# EUROPEAN PATENT APPLICATION

(11) **EP 3 093 615 A1**
(43) Date of publication of application: **16.11.2016**
(21) Application number: 15877377.0
(22) Date of filing: 23.10.2015
(51) Int. Cl.: G01C 9/02, G01C 9/06, G01C 9/24, G01C 9/32, G01C 5/00, G01C 5/04

(54) **LEVEL FOR CHECKING INCLINATION OF STRUCTURE**

(30) Priority: 19.03.2015 KR 20150037951; 30.06.2015 KR 20150092866
(71) Applicant: Bang, So Yoon, Gangneung-si, Gangwon-do 25517 (KR)
(72) Inventor: JEONG, Min Si, Gangneung-si Gangwon-do 25517 (KR)
(74) Representative: Loo, Chi Ching
(86) International application number: PCT/KR2015/011247
(87) International publication number: WO 2016/148364

(57) **Abstract**

Disclosed herein is a level instrument for measuring an inclination of a structure, which may include a level instrument body; multiple transparent tubes which are installed at the level instrument body and are filled with bubbles and liquid; a nonconductive plate which is installed at the level instrument body and is equipped with one to four pairs of electrodes which are disposed at an inner circumferential surface of an inner space formed passing through the nonconductive plate; a conductive disk which is able to electrically connect any pair of one to four pairs of the electrodes based on a rolling position on an inner circumferential surface of the inner space; and multiple laser light oscillators which are installed at the level instrument body so as to emit a laser light when any pair of one to four pairs of the electrodes are electrically connected.

## Description

### Technical Field

The present invention relates to a level instrument, and in particular to a level instrument which is equipped with a luminous element, whereby the level instrument can be used in a dark place or at night. Moreover, the present invention relates to a level instrument which is able to measure any inclination and is configured to use gravity since it is equipped with a luminous element, and in particular to a level instrument for measuring any inclination, wherein it is possible to measure the horizontality of a structure and an inclination angle of a structure, and a remote work can be easily carried out at a time using a laser diode.

### Background Art

A level instrument, in general, is used to measure a horizontal or vertical state of a target or a predetermined inclination at an industrial site, for example, a construction site, a factory, etc. or at home. For example, the horizontal or vertical state of a predetermined building can be measured using a level instrument at a construction site. The measurement may be carried out in such a way to dispose a level instrument on the surface of a structure which will be measured. Moreover, when installing furniture, etc. at home, the level instrument may be used so as to check the horizontality of the furniture.

In the simplest type of the level instrument is configured, bubbles are used. The level instrument is equipped with a transparent tube filled with a liquid, for example, water, and the bubbles are filled together with water in the transparent tube. The bubblers are tended to move in the transparent tube based on the inclination of the level instrument. A user can measure any inclination by checking the position of the bubbles inside of the transparent tube. For example, if the bubbles position within a limit line indicated on the surface of the transparent tube, it means that the inclination is horizontal, and if the bubbles are out of the indicated line of the transparent tube, it means that the inclination is not horizontal.

Since the conventional level instrument is equipped with a transparent tube installed at a level instrument body, it needs a predetermined lighting device when work is necessary in a dark place or at night. More specifically, when it needs to do a work in an indoor space where electric power is not available, it is not easy to visually see the movements of small bubbles. Moreover, if a user's eye sight is not good, the user may feel uneasy to accurately recognize the movements of bubbles which are floating in the liquid filled in the transparent tube.

Furthermore, the level instrument is configured to measure the horizontality of a predetermined structure, but according to situations, it may need to measure an inclination angle at which a structure is inclined. The conventional level instrument is originally designed to measure the horizontality of a structure, not configured to measure an inclination direction or an inclination angle of a predetermined floor. Moreover, it is not able to measure an inclination angle of a pillar or a wall body. The conventional level instrument is unable to adjust a horizontality up to a predetermined distance, for which a remote distance work is not easy using the conventional level instrument.

### Disclosure of Invention

The present invention is made in an effort to solve the aforementioned problems. It is an object of the present invention to provide an improved level instrument.

It is another object of the present invention to provide a level instrument which can be used conveniently in a dark place or at night without using a predetermined lighting device.

It is further another object of the present invention to provide a level instrument which may allow a user to easily measure horizontal and vertical states and a predetermined inclination.

Moreover, the present invention is made in an effort to solve the aforementioned problems. The present invention is equipped with a hollow rotary body which is disposed rotatable. The rotation body may include electric power contact points at its inner circumferential surface, and a ring part connected to the electric power contact points is provided on its outer circumferential surface. The ring part is connected to a wire, thus supplying electric power all the time.

Furthermore, there is provided a level instrument which is equipped with a conduction part in the inside of the rotation body and is able to measure an inclination angle since it is equipped with a laser luminous member which is configured to allow a laser diode to operate in such a way that a conduction part positioned in the middle of the electric power contact points by rotating the rotation body based on the inclination of a predetermined structure.

To achieve the above objects, there is provided a level instrument for measuring an inclination of a structure, which may include, but is not limited to, a level instrument body; one or more transparent tubes which are installed at the level instrument body and are filled with bubbles and liquid; a nonconductive plate which is installed at the level instrument body and is equipped with one to four pairs of electrodes which are disposed at an inner circumferential surface of an inner space formed passing through the nonconductive plate; a conductive disk which is able to electrically connect any pair of one to four pairs of the electrodes based on a rolling position on an inner circumferential surface of the inner space; and one or more laser light oscillators which are installed at the level instrument body so as to emit a laser light when any pair of one to four pairs of the electrodes are electrically connected.

According to a feature of the present invention, the nonconductive plate is installed at the level instrument body in such a way that the moment when any pair of one to four pairs of the electrodes are connected by the conductive disk, matches with the moment when the bubbles contained inside of the transparent tube indicates that a horizontal or vertical state of the level instrument.

According to another feature of the present invention, one to four pairs of the electrodes are disposed at right angle positions with respect to each other.

According to another feature of the present invention, the inner space of the conductive plate and the conductive disk are formed in circular shapes, and the diameter of the inner space is larger than the diameter of the conductive disk in order for the inner circumferential surface of the inner space to partially contact with the outer circumferential surface of the conductive disk.

According to another feature of the present invention, at one side of the level instrument body, a luminous element is further provided, which is configured to be turned on when any pair of one to four pairs of the electrodes are electrically connected.

According to another feature of the present invention, at one side of the level instrument body, a lighting element configured to light the transparent tube is further provided, which is configured to be turned on when any pair of one to four pairs of the electrodes are electrically connected.

To achieve the above objects, there is provided a level instrument which is able to measure a predetermined inclination angle, which may include, but is not limited to, a case for the level instrument; a buoyancy angle indicator which is installed at the case and is able to indicate an angle in such a way to use buoyancy; and a gravity angle indicator which is installed at the case and is able to indicate an angle in such a way to use gravity, wherein a predetermined inclination angle is measured using the buoyancy angle indicator and the gravity angle indicator, and in the gravity angle indicator, a laser light can be emitted in such a way that a pair of electrodes disposed at a hollow inner circumferential surface are electrically connected with each other based on a rolling position of a conductor body which rolls on the inner circumferential surface.

Moreover, the gravity angle indicator may include an angle indication part which is mounted in the case and is disposed rotatable; an electric power supply part which is provided inside of the case and is able to supply electric power; a laser diode which is provided inside of the case and is able to generate a straight light source; and a conductor part which is configured to move to the lower most position by receiving gravity, wherein the instrument is equipped with a laser luminous member so as to measure an inclination angle of a structure.

Moreover, the case may include a reference surface which contacts close with a structure; another reference surface which is formed at a right angle with respect to the former reference surface; and a plane which is formed at a right angle with respect to the former reference surface and the latter reference surface, wherein an inclination angle of the former reference surface can be measured by the angle indication part mounted on the plane, wherein the instrument is equipped with a laser luminous member so as to measure an inclination angle of a structure.

Moreover, the angle indication part may include a rotation body which is disposed rotatable on a plane of the case; a gradation indication part wherein gradations, which indicate angles, are indicated at an outer rim of the rotation body; and a conductor part which is disposed inside of the rotation body, wherein the instrument is equipped with a laser luminous member so as to measure an inclination angle of a structure.

Moreover, the rotation body may include an electric power contact part which is provided at a hollow inner circumferential surface; a ring part which is connected with the electric power contact part and is provided at an outer circumferential surface of the rotation body; and the electric power supply part which is configured to supply electric power to the laser diode, wherein the electric power supplied from the electric power supply part is supplied to the laser diode via the ring part and the electric power contact part, by which the laser diode emits light, wherein the instrument is equipped with a laser luminous member so as to measure an inclination angle of a structure.

Moreover, a plurality of the laser diodes are provided, wherein one laser diode is disposed inside of the case in such a way that a beam emitted in a straight line shape can be emitted parallel to the former reference surface, and another laser diode is disposed inside of the case in such a way that a beam emitted in a straight line shape can be emitted parallel to the latter reference surface, wherein the instrument is equipped with a laser luminous member so as to measure an inclination angle of a structure.

Moreover, two electric power contact parts are provided, and the conductor part is disposed between the electric power contact parts as it is moved by the gravity, by which the electric power contact parts are electrically conducted, thus turning on the laser diode, and in case of the angle indication, the rotation body of the angle indication part is rotated at a predetermined angle to be measured and is disposed in order for a predetermined reference line connecting the two electric power contact parts to be parallel to the ground surface, and the conductor part is moved to between the electric power contact parts by the gravity, by which the electric power contact parts are electrically conducted, thus turning on the laser diode, wherein the instrument is equipped with a laser luminous member so as to measure an inclination angle of a structure.

Moreover, a laser switch is provided between the electric power contact part and the electric power supply pat, so the supply of the electric power to the laser diode can be controlled irrespective of an electric conduction of the electric power contact part, and when the laser switch is on, the laser diode is on only when the electric power contact part is electrically conducted, and when the laser switch is off, the laser diode is off even when the electric power contact part is electrically conducted, wherein the instrument is equipped with a laser luminous member so as to measure an inclination angle of a structure.

Moreover, the case comprises a plurality of level meters, and a lighting part is provided inside of each of the level meters so as to light the inside of each of the level meters, and a lighting switch is provided between the electric power supply part and the lighting part so as to control the supply of the electric power to the lighting part, wherein the instrument is equipped with a laser luminous member so as to measure an inclination angle of a structure.

Moreover, the laser diode may further include a cylinder lens by which a point light source from the laser diode can be converted into a line light source, wherein the instrument is equipped with a laser luminous member so as to measure an inclination angle of a structure.

### Advantageous Effects of the Invention

The level instrument according to the present invention is equipped with a luminous element which is configured to be turned on or off based on the horizontal or vertical state of the level instrument, for which a user can use a level instrument in a dark place or at night. Moreover, a user who has a bad eye sight, is able to easily measure a predetermined horizontality using the level instrument of the present invention. Furthermore, the horizontality can be measured without checking the movements of small size bubbles.

Moreover, the horizontality of a predetermined structure can be measured using gravity. The present invention may be equipped with a buoyancy angle indicator which is configured to operate using buoyancy based on the inclination of the structure, and an angle indicator which is configured to operate using gravity, thus measuring an inclination angle of the structure. The present invention may include a level instrument which is equipped with a lighting part which is able to light the inside of a level meter, thus checking the level meter even if there is not enough light. There is provided a laser luminous member which is configured of laser diodes and is able to provide an easier remote distance work, thus measuring any inclination angle.

### Brief Description of Drawings

Figure 1 is a schematic view for describing a level instrument according to an embodiment of the present invention.
Figure 2 is a perspective view illustrating a level instrument which is able to measure a predetermined inclination angle since it is equipped with a laser luminous member according to the present invention.
Figure 3 is a wiring layout view illustrating a level instrument which is able to measure a predetermined inclination angle since it is equipped with a laser luminous member according to the present invention.
Figure 4 is a plane cross sectional view (A) of a rotation member and a side cross sectional view (B) of the rotation member according to the present invention.
Figure 5 is a detailed view illustrating a buoyancy angle indicator according to the present invention.
Figure 6 is a right side cross sectional view illustrating a buoyancy angle indicator according to the present invention.
Figure 7 is a view illustrating an example of a level instrument which is able to measure a predetermined inclination angle since it is equipped with a laser luminous member according to the present invention.
Figure 8 is a view illustrating another example of a level instrument which is able to measure a predetermined inclination angle since it is equipped with a laser luminous member according to the present invention.
Figure 9 is a view illustrating further another example of a level instrument which is able to measure a predetermined inclination angle since it is equipped with a laser luminous member according to the present invention.

### Modes for carrying out the invention

The present invention will be described in details in conjunction with the embodiments illustrated in the accompanying drawings.

The advantages and features of the present invention and the ways to achieve them will be described with reference to the accompanying drawings and become apparent. It is noted that the present invention is not limited to the descriptions disclosed below, and can be implemented in various forms, provided that it is provided to make more perfect the disclosure of the present invention and inform a person having ordinary skill in the art of the scope of the present invention. The present invention should be defined by the scope of the claims, and the same reference numbers of the present invention represent the same components.

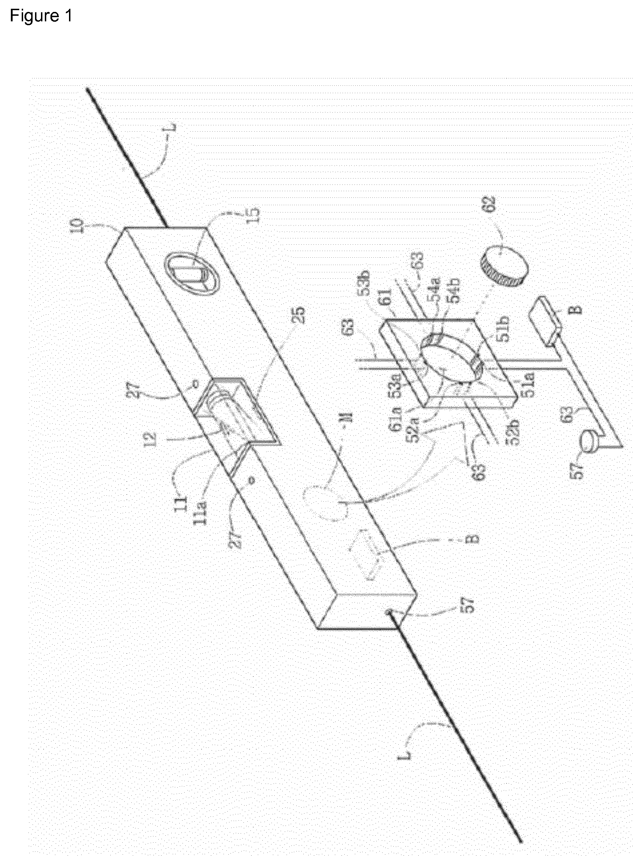

Figure 1 is a schematic view for describing a level instrument according to an embodiment of the present invention.

Referring to Figure 1, the level instrument body 10 according to the present invention may include a measuring part (M) indicated by a dotted line. The detailed configuration of the measuring part (M) is indicated by an arrow mark (A) shown at a side of the enlarged perspective view.

The level instrument according to an embodiment of the present invention may include, but is not limited to, a level instrument body 10, one or more transparent tubes 11 and 15 which are installed at the level instrument body 10 and are filled with bubbles 12 and liquid, a nonconductive plate 61 which is installed at the level instrument body 10, wherein one to four pairs of electrodes 51 a, 51 b, 52a, 52b, 53a, 53b, 54a and 54b are disposed at an inner circumferential surface of a circular inner space 61 a, a conductive disk 62 which is configured to electrically connect any of one to four pairs of the electrodes based on a rolling position on the inner circumferential surface of the nonconductive plate 61, and one or more oscillators 57 which are installed at the level instrument body 10 so as to emit a laser light (L) when any of one to four pairs of the electrodes are electrically connected.

The level instrument body 10 may be configured in a rectangular parallelepiped shape which is longitudinal like a typical level instrument and may have various shapes in another example. The transparent tubes 11 and 15 installed at the level instrument body 10 may be configured in a shape similar with a conventional level instrument. Each of the transparent tubes 11 and 15 is filled with a liquid and bubbles. The positions of the bubbles in the insides of the transparent tubes 11 and 15 may change based on a state where the level instrument 10 is disposed.

The transparent tubes 11 and 15 may allow to recognize a horizontal or vertical state or a 45° inclined state based on an installation position with respect to the body 10. In the drawings, a pair of indication lines 11a are indicated on the surface of a first transparent tube 11, which shows a horizontal state of the level instrument. If the bubbles move within a pair of the indication lines 11 a, it is judged that a horizontal state has been made. A pair of the indication lines same as the above lines may be indicated at a second transparent tube 15 which shows a vertical state of the level instrument. If the bubbles move within the indication lines, it may be judged that a vertical state has been made. A transparent tube which is able to indicate a 45° inclination, may be installed according to another example which is not illustrated in the drawings.

According to one feature of the present invention, the measuring part (M) may include a nonconductive plate 61, and a conductive disk 62. In the nonconductive plate 61, a circular inner space 61a is formed passing through the nonconductive plate 61.

The nonconductive plate 61 may be made of a nonconductive material, for example, a plastic material, and one to four pairs of the electrodes 51 a, 51 b, 52a, 52b, 53a, 53b, 54a and 54b may be formed on the inner surface of the conductive plate 61. There may be provided a conductive plate 62 which is configured to roll on an inner surface of the inner space 61 a so as to electrically connect any of one to four pairs of the electrodes. Moreover, in order to prevent the conductive disk 62 from separating from the inner space 61a of the nonconductive plate 61 a cover (not illustrated) may be provided at a front surface and rear surface of the nonconductive plate 61 so as to close the inner space 61 a of the nonconductive plate 61.

A conductive wire is extending via the nonconductive plate 61 from one to four pairs of the electrodes 51 a, 51 b, 52a, 52b, 53a, 53b, 54a and 54b. The wire 63 is connected to a battery (B) and a laser light oscillator 57. In an example illustrated in the drawing, it is illustrated in the drawings that the wire 63 has been connected to the batter (B) and the laser light oscillator 57 with respect to only one pair of the electrodes, but it should be understood that two to four pairs of the electrodes may be connected to the battery (B) and the laser light oscillator 57. Each pair of the electrodes are electrically connected with each other based on the rolling position of the conductive disk 62.

Each pair of the electrodes are disposed at an angle of 90° with respect to each other when viewing from the front side. More specifically, a first pair of the electrodes 51 a and 51 b are disposed in a 6-clock direction (a lower portion), and a second pair of the electrodes 52a and 52b are disposed in a 9-clock direction (a left portion), and a third pair of the electrodes 53a and 53b are disposed in a 12-clock direction (an upper portion), and a fourth pair of the electrodes 54a and 54b are disposed in a 3-clock direction (a right portion).

The diameter of the circular conductive disk 62 is smaller than the diameter of the circular inner space 61a, and an outer circumferential surface of the conductive disk 62 may partially contact with an inner circumferential surface of the inner space 61 a. Since the outer circumferential surface of the conductive disk 62 contacts with any of one to four pairs of the electrodes, any of one to four pairs of the electrodes can be electrically connected.

The moment when any of one to four pairs of the electrodes is connected by the conductive disk 62, may match with the moment the bubbles 12 move into the indication line 11 a in the transparent tubes 11 and 15. More specifically, the nonconductive plate 61 may be installed at the level instrument body 10 in such a way that any of one to four pairs of the electrodes can be connected by the conductive disk 62 at the moment when the level instrument is disposed at a horizontal or vertical position.

Since the conductive disk 62 moves rolling on the inner surface of the inner space 61 a when the level instrument separates from a horizontal or vertical state, the electrodes may separate from the connected states. Thereafter, a laser oscillation does not occur by the laser oscillator 57, which means that a horizontal or vertical state has not been made.

One to four pairs of the electrodes 51 a, 51 b, 52a, 52b, 53a, 53b, 54a and 54b are connected via an electric cable 63 to the battery (B) and the laser light oscillator 57. When any pair of the electrodes is electrically connected, a laser light can be emitted from the laser light oscillator 57. The laser light oscillator 57 can be installed at a side of the level instrument body 10. The laser light may be oriented to a point which is at a right angle with respect to the horizontal surface of a measuring target, from which a user is able to recognize that the point at which the laser light arrives, is at a right angle with respect to a plane where the level instrument is placed.

As illustrated in the drawing, one electrode among a pair of the electrodes 51 a and 51 b is connected to a first terminal of the laser oscillator 57. Moreover, a second electrode of the battery (B) is connected to a second terminal of the laser oscillator 57. The conductive disk 62 plays a role of a switch. When the electrodes 51 a and 51 b are connected by the conductive disk 62, a laser light oscillates from the laser light oscillator 57, which means that a horizontal state has been made.

The level instrument body 10 may include, but is not limited to, the laser oscillator 57 as well as a lighting element 25 which is for the sake of a luminous element 27 and a transparent tube 11. Electric power can be supplied from the battery (B) to the luminous element 27 and the lighting element 25. The conductive disk 62 may play a role of the switch which is able to supply or block the electric power supply from the battery (B). More specifically, the luminous element 27 and the lighting element 25 can emit light at the moment when the conductive disk 61 connects any pair of one to four pairs of the electrodes. It is preferred that the luminous element 27 and the lighting element 25 may be formed of luminous diodes, and the battery (B) is rechargeable.

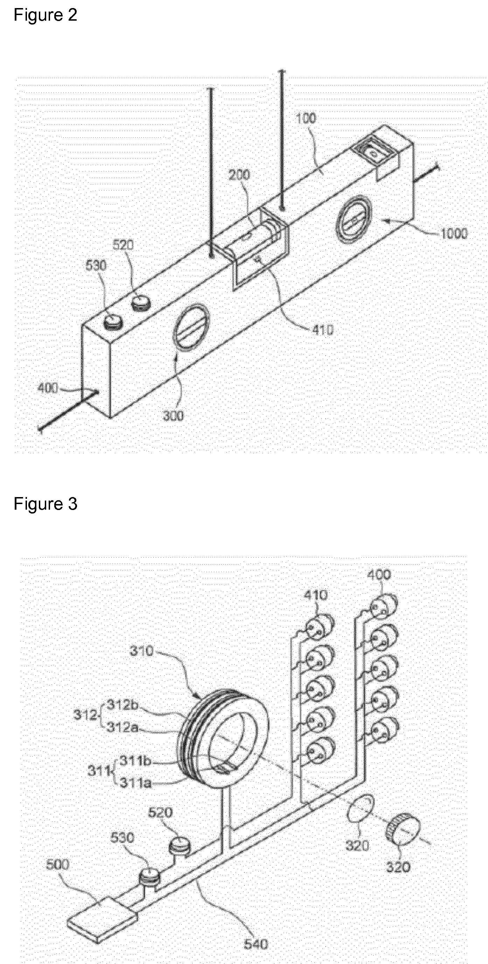

Figure 2 is a perspective view illustrating a level instrument which is able to measure a predetermined inclination angle since it is equipped with a laser luminous member according to the present invention.

Referring to Figure 2, in the level instrument which is equipped with a laser luminous member and is able to measure an inclination angle, the level instrument may include a case 100, and the case 100 is formed of a reference surface which contacts closely with the level instrument, another reference surface which is defined at a right angle with respect to the former reference surface, and a plane which is defined at a right angle with respect to the latter reference surface.

The case 100 may be equipped with a plurality of level meters 200. Each level meter 200 is provided in the case made of a transparent material. Moreover, a lighting part 410 may be further provided inside each level meter 200, by which the level meters can be checked even when there is not any light.

Moreover, any of a plurality of the level meters 200 provided at the case 100 is equipped with a buoyancy angle indicator 1000 which is installed rotatable on the plane and is able to measure an inclination angle of a predetermined structure using a buoyancy.

The buoyancy angle indicator 1000 may be formed of a rotation part 1100 on which the level meters are mounted, and a fixed part 1200 wherein a reference mark 1210 is indicated on an outer rim of the rotation part 1100, wherein the reference mark 1210 is referred to a reference point to measure a gradation indicating an angle and a rotated angle. A protrusion part 1120 is provided on the top of the rotation part 1100 so as to allow an easier rotation, and a liquid accommodation part 1300 containing air bubbles 1310 is provided inside.

The liquid accommodation part 1300 may be configured in a circular pillar shape or a polygonal pillar shape and is sealed for an inside liquid not to leak. Moreover, an indication mark 1320 indicating a gradation indicated on the fixed part is formed on the surface thereof, wherein the indication mark 1320 is disposed longitudinally inside of the rotation part 1100 and is made of a transparent material in order for the center axis of the circular pillar or the polygonal pillar to be parallel to the surface of the plane, by means of which the center axis of the liquid accommodation part can be referred to the rotated angle.

Moreover, there is provided a gravity angle indicator which is installed at the case 100 and is able to indicate angles using the gravity. The gravity angle indicator is equipped with an angle indication part 300 which is mounted on the case 100 and rotates, thus measuring an inclination angle of a predetermined structure.

A plurality of laser diodes 400 are installed at the case 100 so as to measure any inclination angle by turning on a laser. The laser diode 400 which is able to emit an emitted straight light, may be disposed inside of the case 100 in order for the straight light to be parallel to one reference surface, and another laser diode 400 may be disposed inside of the case 100 in order for an emitted straight light to be parallel to another reference surface.

The configuration and function thereof will be described below.

There are provided a lighting switch 520 which is able to determine an electric power supply state to the lighting part 410, and a laser switch 530 which is able to determine an electric power supply state to the laser diode 400.

Figure 3 is a wiring layout view illustrating a level instrument which is able to measure a predetermined inclination angle since it is equipped with a laser luminous member according to the present invention.

Referring to Figure 3, a gravity angle indicator is installed at the case 100 and is able to indicate an angle using the gravity.

The gravity angle indicator may include an angle indication part 300 which is mounted on the case and rotates, an electric power supply part 500 which is provided inside of the case and is able to supply electric power, a laser diode 400 which is provided inside of the case and is able to generate a straight light source, and a conductor part 320 which is able to move to the lower most position based on the received gravity.

The angle indication part 300 may include a rotation body 310 which is disposed rotatable on the plant of the case 100, and a gradation indication part 330 wherein gradations corresponding to angles are indicated on an outer rim of the rotation body 310, wherein the conductor part 320 is disposed inside of the rotation body 310.

The rotation body 310 is disposed rotatable at the case 100. In order for the rotation body 310 to be rotatable, there may be a way wherein a thrust bearing is used, and another way wherein a groove is formed at an outer circumferential surface, and a stopper connected to a spring is fitted into the groove. In addition to these ways, various other ways may be used for the same purpose.

Moreover, it is preferred that the rotation body 310 is made of a nonconductive material, for example, wood, plastic, rubber, etc. which are not able to transfer electricity or heat since they have high resistances with respect to electricity or heat.

Furthermore, the rotation body 310 is equipped with a through hollow configuration, wherein an electric power contact point 311 is disposed at a hollow inner circumferential surface. There is provided a ring part 312 which is connected to the electric power contact part 311 and is disposed at an outer circumferential surface of the rotation body 310 and has a conductive property.

The electric power contact part 311 is formed of an electric power contact point (A) 311 a and an electric power contact point (B) 311 b and may include a conductor part 320 which is employed to connect the electric power contact point (A) 311 a and the electric power contact point (B) 311 b. The conductor part 320 may be manufactured in a ball shape or a circular plate shape.

The ring part 312 may be formed of a ring part (A) 312a and a ring part (B) 312b.

An electric power supply part 500 may be provided at the laser diode 400 so as to supply electric power, whereupon the electric power supplied from the electric power supply part 500 can be supplied to the laser diode 500 via the ring part 312 and the electric power contact part 311, thus turning on the laser diode 500.

Moreover, there are provided a lighting switch 520 which is able to determine an electric power supply state to the lighting part 410, and a laser switch 530 which is able to determine an electric power supply state to the laser diode 400.

If the conductive part 310 is disposed at an intermediate portion of the electric power contact part 311, the electric power contact part can be connected, and the laser diode 400 can be turned on.

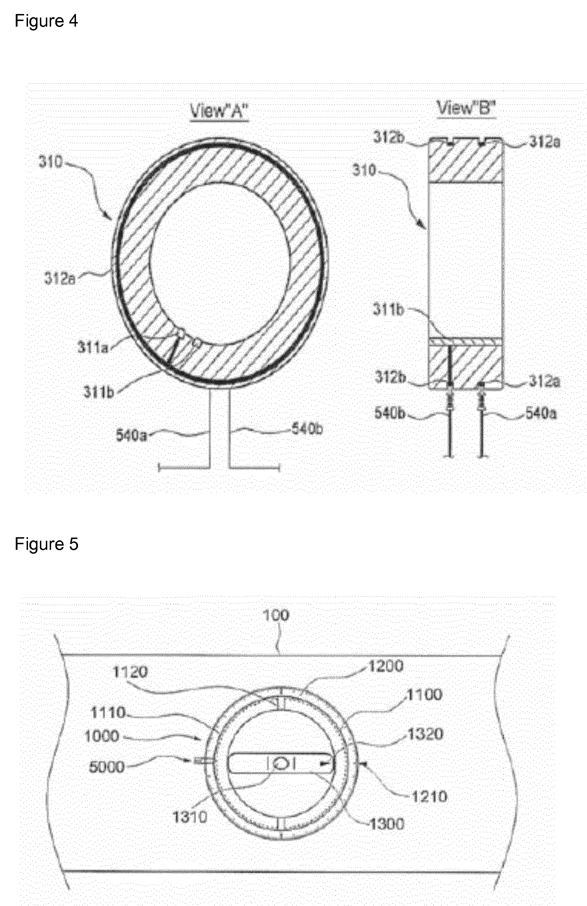

An inclination angle of the structure can be measured using the aforementioned structure. If the rotation body is rotated at a predetermined angle to be measured, when the measurement reference surface (a surface contacting with the structure in Figure 5) matches with the angle to be measured, the electric power contact part 311 can be disposed facing the ground.

In this state, the conductive part 310 will move by the gravity and will be disposed between the electric power contact parts, by which the electric power contact point (A) 311 a and the electric power contact point (B) are connected, thus conducting electric power.

More specifically, the conductive part 310 can be disposed at an intermediate portion of the electric power contact part 311 with the aid of the gravity, and in this state, the electric power contact part 311 is electrically conducted, thus turning on the laser diode 400. The direction of the beam that the laser diode emits can be matched with the surface of the structure, which may indicate an inclination angle of the structure.

If the laser switch 530 is on, the electric power contact part 311 is electrically conducted, so the laser diode 400 can be turned on, and if the laser switch 530 is off, even though the electric power contact part 311 is electrically conducted, the laser diode 400 may become an off state.

In the same way, if the lighting switch 520 is on, the lighting part 410 can be turned on, and if the lighting switch 520 is off, the lighting part 410 can be turned off.

Figure 4 is a plane cross sectional view (A) of a rotation member and a side cross sectional view (B) of the rotation member according to the present invention.

Referring to Figure 4, it is preferred that the rotation body 310 is made of a material having a nonconductive property, for example, wood, plastic, etc. which is not able to transfer electricity or heat since it has a high resistance with respect to electricity or heat, and the rotation body 310 may include a through hollow shape.

The electric power contact point (A) 311 a and the electric power contact point (B) 311 b are provided at an inner circumferential surface of the hollow shape. The ring part (A) 312a and the ring part (B) 312b are provided at an outer circumferential surface of the rotation body.

Here, the ring part (A) 312a is connected with the electric power contact point (A) 311 a, and the ring part (B) 312b is connected with the electric power contact point (B) 311 b.

The ring part (A) 312a slide-contacts with a wire 540a, and the ring part (B) 312b slide-contacts with a wire 540b.

Even when the rotation body 310 is rotating, the ring part (A) 312a and the ring part (B) 312b can keep a slide-contact with the wires 540a and 540b, by which electric current can be continuously supplied. Even when the rotation body 310 rotates, the conductor part 320 can position in the middle of the electric power contact part 311 with the aid of the aforementioned structure, by means of which the laser diode 400 can be turned on.

Figure 5 is a detailed view illustrating a buoyancy angle indicator according to the present invention.

The buoyancy angle indicator 1000 may include a rotation part 1100 on which the level meter is mounted, and a fixed part 1200 wherein a reference mark 1210 has been indicated at an outer rim of the rotation part 1000, the reference mark 1210 corresponding to a reference point to measure any gradation corresponding to angles, and the rotated angle.

A protrusion part 1120 is provided on the top of the rotation part 1100 so as to allow an easier rotation, and an angle fixing groove 1110 having an inner groove is formed on an outer circumferential surface, and a liquid accommodation part 1300 containing air bubbles 1310 is provided inside.

There is provided a stopper part 5000 to fix at a predetermined angle the rotation part 1100. The stopper part 5000 is disposed inside of the case 100. Since a stopper is fitted in the angle fixing groove 1110 so as to fix the rotation part 1100, the rotation part 1100 can be fixed.

If the rotation part 1100 rotates, the spring is contracted, and the stopper separates from the angle fixing groove 1110, whereby the rotation part 1100 can rotate.

The liquid accommodation part 1300 is formed in a circular pillar shape or a polygonal pillar shape and is selected to prevent any leakage of the inside liquid. It is disposed in a longitudinal direction in the inside of the rotation part 1100 in such a way that a center axis of a circular pillar or a polygonal pillar can be parallel to the surface of the plane.

The liquid accommodation part 1300 is made of a transparent material, and an indication mark 1320 may be formed on a surface thereof so as to indicate the gradations indicated on the fixed part, by which it is possible to check the angle where the center axis of the liquid accommodation part has rotated.

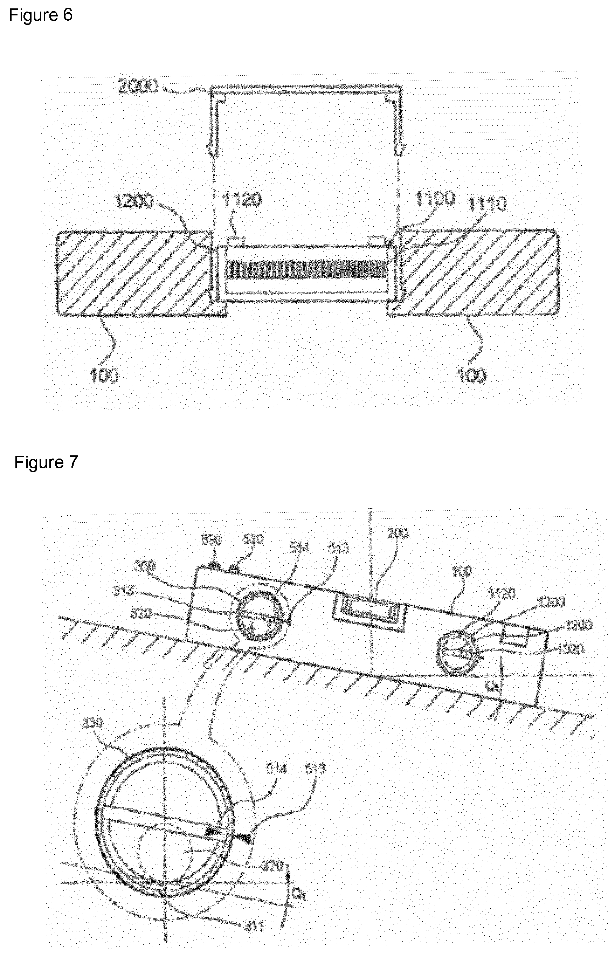

Figure 6 is a right side cross sectional view illustrating a buoyancy angle indicator according to the present invention.

A through hole is formed at the case 100. The buoyancy angle indicator 1000 may be inserted into the through hole, so the level meter can be checked from both the plane and the bottom surface. The fixed part 1200 of the buoyancy angle indicator 1000 can be fixed by a protrusion part formed at a lower portion of the groove of the case 100, and the fixing cover 2000, and the bottom surface of the fixed part 1200 may be formed in a through hollow shape or may be formed of a transparent material, by which the level meter inserted in the inside of the buoyancy angle indicator 1000 can be checked from both surfaces.

The rotation part 1000 inserted inside the fixed part 1200 may be equipped with a protrusion part 1120 employed at the top thereof so as to cause an easier rotation. An angle fixing groove 1110 having an inner groove may be formed on an outer circumferential surface thereof.

A fixing cover 2000 may be provided, which is able to fix the buoyancy angle indicator. The fixing cover 2000 may be engaged to the case 100 with the aid of the engaging groove.

Moreover, the protrusion part 1120 is disposed hidden from the outside so as to prevent any damage thereof at a construction site.

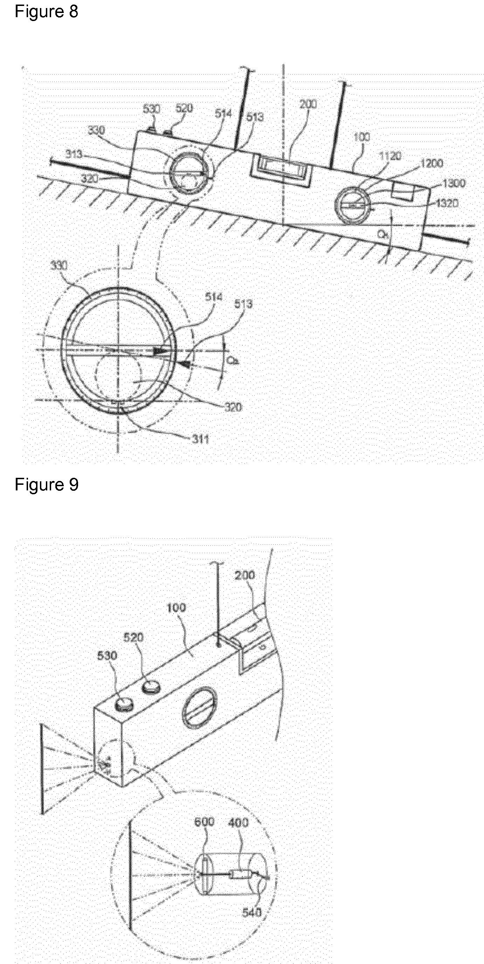

Figures 7 and 8 are views for describing embodiments of the present invention.

Referring to Figure 7, if a reference surface of the case 100 is attached to an inclination surface of a predetermined structure in order to measure an inclination angle of the structure which has been inclined at a predetermined angle (Q1), the conductive part 320 will move by the gravity and separate from the electric power contact part 311.

Moreover, the angle formed between the inclination of a predetermined reference line connecting the electric power contact part 311 and the ground surface which is horizontal to the inclination of a predetermined reference line is same as the inclination angle (Q1) of the structure.

Referring to Figure 8, the rotation body 310 is rotated for a predetermined reference line connecting the electric power contact part 311 to be parallel to the ground surface so that the conductive part 3110, which has moved by the gravity, can be disposed at an intermediate portion of the electric power contact part 311.

If the rotation body 310 is rotated at an angle (Q2), the conductive part 310 may position at an intermediate portion of the electric power contact part 311, by which the electric power contact part 311 can be electrically conducted, thus turning on the laser diode 400.

The angle (Q2) at which the rotation body 310 has rotated, corresponds to the angle at which the electric power contact part 311 has moved to be horizontal (0°) to the ground surface from the angle (Q1) between the inclination of a predetermined reference line connecting the electric power contact part 311, and the horizontal ground surface, from which the inclination angle of the structure can be Q1=Q2.

Moreover, in the buoyancy angle indicator 1000 configured to measure an inclination angle using a buoyancy, the case 100 is attached to an inclined surface of the structure so as to measure an inclination angle of the structure which has been inclined at a predetermined angle (Q1), the level meter attached to the inside of the rotation part 1100 is at a right angle with respect to the structure, and the rotation part 1100 is rotated and adjusted at an angle Q2 in order for the level meter attached to the inside of the rotation part 1100 to be horizontal to the ground surface and in order for the air bubbles to move within the horizontal reference line.

If the air bubbles 1310 move within the horizontal reference line and are adjusted horizontal to the ground surface (Q1=Q2), a predetermined inclined angle can be obtained using a gradation difference between the reference mark 1210 of the fixed part 1200 and the indication mark 1320 of the liquid accommodation part 1300.

Figure 9 is a view illustrating further another example of a level instrument which is able to measure a predetermined inclination angle since it is equipped with a laser luminous member according to the present invention.

Referring to Figure 9, the laser diode 400 may further include a cylinder lens 600. The cylinder lens 600 is able to convert a point light source coming in from the laser diode 400 into a line-shaped light source. This line-shaped light may be used for various applications, if necessary.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

### Legend of reference numbers

| | | | |
|---|---|---|---|
| 10: | Level instrument body | 11: | First transparent tube |
| 12: | Bubbles | 15: | Second transparent tube |
| 61: | Nonconductive plate | 62: | Conductive disk |
| 100: | Case | 200: | Level meter |
| 300: | Angle indication part | 310: | Rotation part |
| 311: | Electric power contact part | 311 a: | Electric power contact point (A) |
| 311b: | Electric power contact point (B) | 312: | Ring part |
| 312a: | Ring part (A) | 312b: | Ring part (B) |
| 313: | Protrusion part | 314: | Indication mark |
| 315: | Reference mark | 320: | Conductor part |
| 330: | Gradation indication part | 400: | Laser diode |
| 410: | Lighting part | 500: | Electric power supply part |
| 520: | Lighting switch | 530: | Laser switch |
| 540, | 540a, 540b: Wires | 600: | Cylinder lens |
| 1000: | Buoyancy angle indicator | 1100: | Rotation part |
| 1110: | Angle fixing groove | 1120: | Reference mark |
| 1200: | Fixing part | 1210: | Reference mark |
| 1300: | Liquid accommodation part | 1310: | Air bubbles |
| 1320: | Indication mark | 2000: | Fixing cover |
| 5000: | Stopper part | | |

## Claims

1. A level instrument, comprising:
a pair of electrodes which are provided at a hollow inner circumferential surface, wherein the electrodes are electrically connected based on a rolling position of a conductor part which is configured to roll on the inner circumferential surface, thus emitting a laser light and measuring the inclination of a predetermined structure.

2. A level instrument for measuring an inclination of a structure, comprising:
a level instrument body;
one or more transparent tubes which are installed at the level instrument body and are filled with bubbles and liquid;
a nonconductive plate which is installed at the level instrument body and is equipped with one to four pairs of electrodes which are disposed at an inner circumferential surface of an inner space formed passing through the nonconductive plate;
a conductive disk which is able to electrically connect any pair of one to four pairs of the electrodes based on a rolling position on an inner circumferential surface of the inner space; and
one or more laser light oscillators which are installed at the level instrument body so as to emit a laser light when any pair of one to four pairs of the electrodes are electrically connected.

3. The instrument of claim 2, wherein the nonconductive plate is installed at the level instrument body in such a way that the moment when any pair of one to four pairs of the electrodes are connected by the conductive disk, matches with the moment when the bubbles contained inside of the transparent tube indicates that a horizontal or vertical state of the level instrument.

4. The instrument of claim 2, wherein one to four pairs of the electrodes are disposed at right angle positions with respect to each other.

5. The instrument of claim 2, wherein the inner space of the conductive plate and the conductive disk are formed in circular shapes, and the diameter of the inner space is larger than the diameter of the conductive disk in order for the inner circumferential surface of the inner space to partially contact with the outer circumferential surface of the conductive disk.

6. The instrument of claim 2, wherein at one side of the level instrument body, a luminous element is further provided, which is configured to be turned on when any pair of one to four pairs of the electrodes are electrically connected.

7. The instrument of claim 2, wherein at one side of the level instrument body, a lighting element configured to light the transparent tube is further provided, which is configured to be turned on when any pair of one to four pairs of the electrodes are electrically connected.

8. A level instrument which is able to measure a predetermined inclination angle, comprising:
a case for the level instrument;
a buoyancy angle indicator which is installed at the case and is able to indicate an angle in such a way to use buoyancy; and
a gravity angle indicator which is installed at the case and is able to indicate an angle in such a way to use gravity, wherein a predetermined inclination angle is measured using the buoyancy angle indicator and the gravity angle indicator, and in the gravity angle indicator, a laser light can be emitted in such a way that a pair of electrodes disposed at a hollow inner circumferential surface are electrically connected with each other based on a rolling position of a conductor body which rolls on the inner circumferential surface.

9. The instrument of claim 8, wherein the gravity angle indicator comprises:
an angle indication part which is mounted in the case and is disposed rotatable;
an electric power supply part which is provided inside of the case and is able to supply electric power;
a laser diode which is provided inside of the case and is able to generate a straight light source; and
a conductor part which is configured to move to the lower most position by receiving gravity, wherein the instrument is equipped with a laser luminous member so as to measure an inclination angle of a structure.

10. The instrument of claim 8, wherein the case comprises:
a reference surface which contacts close with a structure;
another reference surface which is formed at a right angle with respect to the former reference surface; and
a plane which is formed at a right angle with respect to the former reference surface and the latter reference surface, wherein an inclination angle of the former reference surface can be measured by the angle indication part mounted on the plane, wherein the instrument is equipped with a laser luminous member so as to measure an inclination angle of a structure.

11. The instrument of claim 9, wherein the angle indication part comprises:
a rotation body which is disposed rotatable on a plane of the case;
a gradation indication part wherein gradations, which indicate angles, are indicated at an outer rim of the rotation body; and
a conductor part which is disposed inside of the rotation body, wherein the instrument is equipped with a laser luminous member so as to measure an inclination angle of a structure.

12. The instrument of claim 11, wherein the rotation body comprises:
an electric power contact part which is provided at a hollow inner circumferential surface;
a ring part which is connected with the electric power contact part and is provided at an outer circumferential surface of the rotation body; and
the electric power supply part which is configured to supply electric power to the laser diode, wherein the electric power supplied from the electric power supply part is supplied to the laser diode via the ring part and the electric power contact part, by which the laser diode emits light, wherein the instrument is equipped with a laser luminous member so as to measure an inclination angle of a structure.

13. The instrument of claim 11, wherein a plurality of the laser diodes are provided, wherein one laser diode is disposed inside of the case in such a way that a beam emitted in a straight line shape can be emitted parallel to the former reference surface, and another laser diode is disposed inside of the case in such a way that a beam emitted in a straight line shape can be emitted parallel to the latter reference surface, wherein the instrument is equipped with a laser luminous member so as to measure an inclination angle of a structure.

14. The instrument of claim 12, wherein two electric power contact parts are provided, and the conductor part is disposed between the electric power contact parts as it is moved by the gravity, by which the electric power contact parts are electrically conducted, thus turning on the laser diode, and in case of the angle indication, the rotation body of the angle indication part is rotated at a predetermined angle to be measured and is disposed in order for a predetermined reference line connecting the two electric power contact parts to be parallel to the ground surface, and the conductor part is moved to between the electric power contact parts by the gravity, by which the electric power contact parts are electrically conducted, thus turning on the laser diode, wherein the instrument is equipped with a laser luminous member so as to measure an inclination angle of a structure.

15. The instrument of claim 12, wherein a laser switch is provided between the electric power contact part and the electric power supply pat, so the supply of the electric power to the laser diode can be controlled irrespective of an electric conduction of the electric power contact part, and when the laser switch is on, the laser diode is on only when the electric power contact part is electrically conducted, and when the laser switch is off, the laser diode is off even when the electric power contact part is electrically conducted, wherein the instrument is equipped with a laser luminous member so as to measure an inclination angle of a structure.

16. The instrument of claim 9, wherein the case comprises a plurality of level meters, and a lighting part is provided inside of each of the level meters so as to light the inside of each of the level meters, and a lighting switch is provided between the electric power supply part and the lighting part so as to control the supply of the electric power to the lighting part, wherein the instrument is equipped with a laser luminous member so as to measure an inclination angle of a structure.

17. The instrument of claim 9, wherein the laser diode further comprises a cylinder lens by which a point light source from the laser diode can be converted into a line light source, wherein the instrument is equipped with a laser luminous member so as to measure an inclination angle of a structure.
